# EUROPÄISCHE PATENTANMELDUNG

(11) **EP 1 970 532 A1**
(43) Veröffentlichungstag der Anmeldung: **17.09.2008**
(21) Anmeldenummer: 07005081.0
(22) Anmeldetag: 12.03.2007
(51) Int. Cl.: F01D 5/06, F02C 6/08

(54) **Läufer einer thermischen Strömungsmaschine sowie Gasturbine**

(71) Anmelder: SIEMENS AKTIENGESELLSCHAFT, 80333 München (DE)
(72) Erfinder: Benkler, Francois, Dr., 40880 Ratingen (DE); Ehehalt, Ulrich, 45131 Essen (DE); Hoell, Harald, 63607 Wächtersbach (DE); Kahlstorf, Uwe, 65510 Idstein (DE); Kolk, Karsten, Dr., 45479 Mülheim an der Ruhr (DE); Loch, Walter, 45472 Mülheim an der Ruhr (DE); Schneider, Peter-Andreas, 48145 Münster (DE)

(57) **Zusammenfassung**

Ein Läufer (2) einer thermischen Strömungsmaschine, insbesondere einer Gasturbine, mit einer Anzahl von Läuferteilen (6), die durch einen gemeinsamen, mittig durch die Läuferteile (6) hindurch geführten Zuganker (4) zusammengehalten sind, soll auch bei zunehmender Baulänge der Gasturbine einen zuverlässigen und sicheren Betrieb gewährleisten. Dabei sollen die Schwingungsamplituden des Zugankers (4) insbesondere im Bereich der mittleren Hohlwelle möglichst gering gehalten werden. Dazu ist erfindungsgemäß der Zuganker (4) in mindestens einem der ihn umgebenden Läuferteile (6) stellenweise über eine Anzahl von den Zuganker (4) in Umfangsrichtung umlaufenden Sternfedern (10) fixiert.

## Beschreibung

Die Erfindung betrifft einen Läufer einer thermischen Strömungsmaschine, insbesondere einer Gasturbine, mit einer Anzahl von Läuferteilen, die durch einen gemeinsamen, mittig durch die Läuferteile hindurch geführten Zuganker zusammengehalten sind. Sie bezieht sich weiterhin auf eine Gasturbine mit einem derartigen Läufer.

Zu den thermischen Strömungsmaschinen werden Dampf- und Gasturbinen sowie Rotationsverdichter und Strahltriebwerke gezählt. Diese weisen üblicherweise einen von einem feststehenden Gehäuse umgebenen drehbar gelagerten Rotor auf. Die feststehenden Baugruppen einer thermischen Strömungsmaschine werden zusammengefasst auch als Stator bezeichnet. Zwischen dem Rotor und dem Stator ist ein in axialer Richtung der Strömungsmaschine verlaufender Strömungskanal für ein kompressibles Strömungsmedium angeordnet. An dem Rotor sind üblicherweise in den Strömungskanal hineinragende und zu Schaufelgruppen oder Schaufelreihen zusammengefasste Laufschaufeln befestigt. Im Falle einer Kraftmaschine, wie etwa einer Gasturbine, dienen die Laufschaufeln zum Antrieb der Rotorwelle durch Impulsübertrag aus einem heißen und unter Druck stehenden Strömungsmedium.

Im Falle eines zu den Arbeitsmaschinen zählenden Rotationsverdichters wird umgekehrt die Rotorwelle z. B. durch einen Elektro- oder Verbrennungsmotor oder eine Turbine oder auf andere Weise angetrieben. Die rotorseitig angeordneten Laufschaufeln dienen dabei zur Komprimierung des im Strömungskanal befindlichen Strömungsmediums, das sich bei diesem Vorgang zugleich erwärmt.

Bei einer Gasturbine sind eine Verdichtereinheit und eine Turbineneinheit auf einer gemeinsamen Welle angeordnet.

Der Rotor einer Gasturbine, auch als Läufer bezeichnet, ist üblicherweise betriebsbedingt einer hohen mechanischen und thermischen Belastung ausgesetzt. Vor allem durch die hohe Temperatur des Arbeitsmediums und die auf den Läufer wirkenden Kräfte während des Betriebes der Gasturbine wird die Rotorkomponente stark beansprucht. Um trotzdem einerseits die Betriebssicherheit gewährleisten zu können und andererseits die Fertigungskosten des Läufers in akzeptablen Grenzen zu halten, wurden in der Vergangenheit eine Vielzahl von Konstruktionsmöglichkeiten für derartige Turbinenläufer vorgeschlagen.

Um die Herstellung des Läufers zu ermöglichen, kann der Läufer auch aus einzelnen Läuferteilen zusammengesetzt sein. Beispielsweise werden die einzelnen Läuferteile über einen Zuganker zusammengehalten. Dabei wird der Zuganker durch eine axial verlaufende Ausnehmung in den Läuferteilen geführt, wodurch die Läuferteile miteinander verspannt werden können.

Der Läufer der Gasturbine ist endseitig durch geeignete Lager im Gehäuse der Turbine angeordnet. Während des Betriebes der Gasturbine treten jedoch Schwingungen der Rotorkomponente auf, deren Frequenz u. a. vom Abstand der beiden Axiallager, d. h. von der frei schwingenden Länge des Läufers, insbesondere von der frei schwingenden Länge des Zugankers, bei einer derartigen Bauweise abhängig ist. Mit zunehmender Baulänge der Gasturbine nimmt auch die frei schwingende Länge des Zugankers zu, was dazu führt, dass sich dessen Eigenfrequenz auf ein niedrigeres Niveau nahe der Rotationsfrequenz der Rotorkomponente verschiebt.

Um die Betriebssicherheit der Gasturbine auch bei zunehmender Baulänge gewährleisten zu können, und auch im Hinblick auf die üblicherweise geringe Eigendämpfung des Systems ist es daher erforderlich, dass die Eigenfrequenz insbesondere des Zugankers hinreichend oberhalb der Betriebsdrehzahl liegt.

Wünschenswert wäre es, die Eigenfrequenz des Zugankers auch bei zunehmender Baulänge der Turbine hinreichend oberhalb der Betriebsdrehzahl zu halten. Somit wäre einerseits die Betriebssicherheit der Turbine gewährleistet, und andererseits könnte somit dem steigenden Leistungsbedarf, zu dessen Deckung beispielsweise eine Erweiterung der Baulänge der Gasturbine notwendig ist, entsprochen werden.

Der Erfindung liegt daher die Aufgabe zugrunde, einen Läufer der eingangs genannten Art anzugeben, welcher einen sicheren Betrieb der Gasturbine auch bei steigender Baulänge gewährleistet. Weiterhin sollen die Schwingungsamplituden des Zugankers insbesondere im Bereich der mittleren Hohlwelle möglichst klein gehalten werden.

Diese Aufgabe wird erfindungsgemäß gelöst, indem der Zuganker in mindestens einem der ihn umgebenden Läuferteile stellenweise über eine Anzahl von den Zuganker in Umfangsrichtung umlaufenden Sternfedern fixiert ist.

Die Erfindung geht dabei von der Überlegung aus, dass gerade für das Erreichen einer hohen Steifigkeit des Läufers die Läuferteile besonders starr mit dem Zuganker verbunden sein sollten, wobei die thermisch bedingten unterschiedlichen Ausdehnungen der Rotorkomponenten dennoch ausgleichbar gehalten sein sollten. Insbesondere sollte dem Umstand Rechnung getragen werden, dass aufgrund der steigenden Anforderungen bezüglich der Leistung der Turbine deren Länge zunimmt, wodurch sich die Eigenfrequenz des Zugankers der Betriebsdrehzahl der Gasturbine nähert. Der Zuganker sollte zu diesem Zweck geeignet abgestützt werden, um dessen Steifigkeit zu erhöhen. Zur Kompensation von Dehnungseffekten und auch zur Gewährleistung der gewünschten Stützwirkung sind dabei die Sternfedern vorgesehen, die einerseits in der Art eines besonders flexiblen Systems passiv geeignet auf Dehnungseffekte reagieren können, und die andererseits gerade auch in Reaktion auf die bei der Rotation auftretenden Fliehkräfte eine dadurch bedingte Beeinträchtigung der Stützwirkung vermeiden.

Zu Kühlzwecken und insbesondere zur Führung eines Kühlluftstroms ist vorteilhafterweise insbesondere im Bereich der mittleren Hohlwelle der Turbine eine Anzahl von sich koaxial erstreckenden, den Zuganker umgebenden Kühlluft-Trennrohren vorgesehen. Der Zuganker ist dabei von den Kühllufttrennrohren umgeben, welche ihrerseits in weiterer vorteilhafter Ausgestaltung jeweils mittels in Umfangsrichtung verlaufender Sternfedern voneinander beabstandet sind. Somit ist der Zuganker in einer Anzahl von Kühlluft-Trennrohren gestützt, wobei das in radialer Richtung gesehen äußerste Kühlluft-Trennrohr ebenfalls mit einer Sternfeder in der axial verlaufenden Ausnehmung des Läufers fixiert ist.

In besonders vorteilhafter Ausgestaltung ist der Läufer in einer thermischen Strömungsmaschine, vorzugsweise in einer Gasturbine, eingesetzt.

Die mit der Erfindung erzielten Vorteile bestehen insbesondere darin, dass durch die Abstützung der Läuferteile gegenüber dem Zuganker mittels der Sternfedern ein sicherer Betrieb der Gasturbine auch mit deren zunehmender Baulänge ermöglicht ist. Insbesondere können durch die Erhöhung der Steifigkeit des Läufers die Schwingungsamplituden besonders klein gehalten werden. Zudem ist das System zur Erhöhung der Steifigkeit des Läufers durch die Verspannung der Läuferteile mit dem Zuganker mit vergleichsweise nur geringem Aufwand, insbesondere wegen der vergleichsweise einfachen Montage, des geringen Gewichts und der geringen Kosten, realisierbar. Weiterhin können durch ein derartig gebildetes System die thermisch bedingten Relativbewegungen zwischen den Läuferteilen und dem Zuganker besonders gut kompensiert werden. Gleichzeitig ist aber auch eine aufgrund der hohen thermischen Belastung der Rotorkomponente notwendige Kühlung mittels einer in axialer Richtung des Läufers verlaufende Kühlluftführung gewährleistet.

Ein Ausführungsbeispiel der Erfindung wird anhand einer Zeichnung näher erläutert. Darin zeigen:
- FIG 1: eine Schnittdarstellung eines Turbinenläufers mit einem Zuganker, und
- FIG 2: den Zentralbereich des Turbinenläufers nach FIG 1 im Querschnitt.

Gleiche Teile sind in beiden Figuren mit denselben Bezugszeichen versehen.

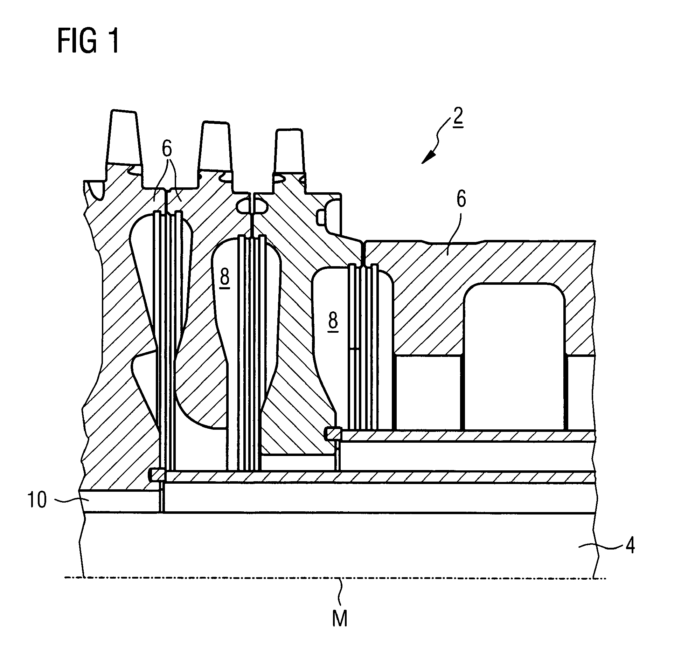

Der Läufer 2 gemäß FIG 1 ist Teil einer nicht näher dargestellten Gasturbine und umfasst eine Anzahl einzelner, durch einen gemeinsamen Zuganker 4 zusammengehaltener und zu einer Einheit zusammengefügter Läuferteile 6. Dabei sind die jeweiligen Läuferteile 6 verbindungsseitig mit symmetrisch zur Mittelachse M des Läufers 2 verlaufenden Ausnehmungen 8 versehen, wobei die dadurch entstehenden Konturen korrespondierend zu den Konturen des jeweiligen benachbarten Läuferteils 6 ausgebildet sind, wodurch eine konzentrische Ausrichtung der Läuferteile 6 zur Mittelachse M bewirkt wird.

Jedes der Läuferteile 6 ist zur Führung des Zugankers 4 mit einer axial verlaufenden, mittig angeordneten Bohrung 10 versehen, wobei der Zuganker endseitig mit einem Läuferteil 6 verschraubt ist und somit alle dazwischen angeordneten Läuferteile 6 zusammengehalten werden. Die in den Läuferteilen 6 eingebrachten Ausnehmungen 8 dienen dabei zur Führung eines Kühlmediums zum Kühlen der Rotorkomponenten, indem Kühlluft über einen zwischen den Zuganker 4 und Läuferteil 6 gebildeten Kühlkanal zugeführt wird.

Der Läufer 2 ist für eine besonders hohe innere Steifigkeit ausgelegt. Damit soll insbesondere erreicht werden, dass selbst bei vergleichsweise groß gewählter Baulänge des Läufers 2 dessen Eigenfrequenzen ausreichend weit oberhalb der Betriebsdrehzahl der Gasturbine gehalten werden können. Damit sollen auftretende Schwingungsamplituden und Resonanzeffekte ausreichend gering gehalten werden, um in jedem Fall eine hohe betriebliche Sicherheit der Turbine zu gewährleisten.

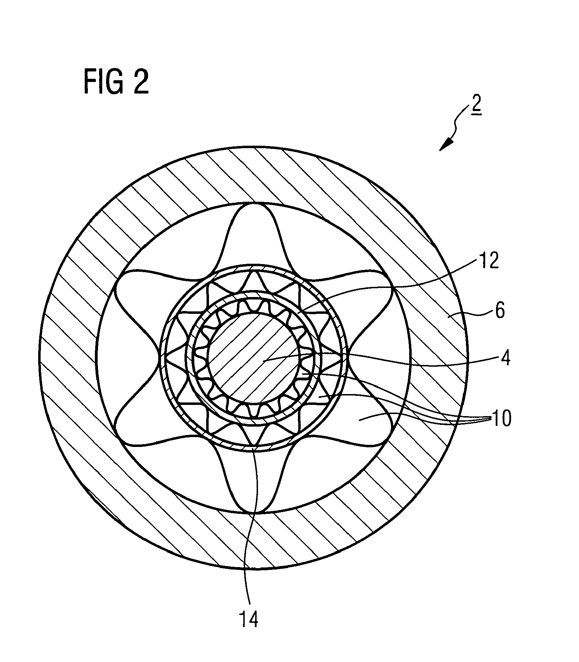

Um die gewünschte Steifigkeit des Läufers 2 zu gewährleisten, ist der Zuganker 4 über eine Anzahl von Sternfedern 10 gegenüber den Läuferteilen 6 beispielsweise mittelbar abgestützt, wie dies im Querschnitt des Zentralbereichs in FIG 2 gezeigt ist. Auch eine unmittelbare Abstützung des Zugankers 4 an dem Läuferteil 6 über nur eine einzige Sternfeder 10 ist dabei möglich. Die Sternfedern 10 sind dabei dafür ausgelegt, selbst bei auftretenden thermischen Dehnungseffekten einen zuverlässigen mechanischen Kontakt zwischen dem Zuganker 4 und dem umgebenden Läuferteil 6 herzustellen, wobei zudem noch bei zunehmender Läuferdrehzahl die Steifigkeit des Systems und die Stützwirkung noch gesteigert werden soll.

Wie der Darstellung in FIG 2 insbesondere entnehmbar ist, ist in der Art einer mehrschichtigen Bauweise eine Mehrzahl der Sternfedern 10 möglich und dessen Axiallänge wird je nach Bedarf festgelegt. Den Zuganker 4 umgibt dabei in der Art einer ersten Lage eine erste Sternfeder 10, die nach außen hin an der Innenseite eines inneren, den Zuganker 4 umgebenden Kühlluft-Trennrohrs 12 abgestützt ist. Das innere Kühlluft-Trennrohr 12 ist seinerseits außenseitig von einer weiteren Sternfeder 10 umgeben, die wiederum nach außen hin an der Innenseite eines äußeren, das innere Kühlluft-Trennrohr 12 umgebenden Kühlluft-Trennrohrs 14 abgestützt ist. Dieses ist ebenfalls wieder von einer Sternfeder 10 umgeben, die nunmehr nach außen hin an der Innenseite der Zentralbohrung des jeweiligen Läuferteils 6, beispielsweise einer mittleren Hohlwelle, abgestützt ist.

Durch diese Bauweise ist gewährleistet, dass bei einfacher Bauweise, geringem Gewicht und geringem Montage- und Herstellungsaufwand Dehnungs- und Fliehkrafteffekte wirksam kompensiert und ein zuverlässiger mechanischer Kontakt zwischen dem Zuganker 4 und den umgebenden Bauteilen aufrecht erhalten werden können. Darüber hinaus wirkt dieses System selbstzentrierend für den Zuganker 4. Temperaturbedingte Dehnungseffekte resultieren bei Verwendung der Sternfedern 10 zudem in einer Verstärkung des mechanischen Kontakts und somit in zunehmender Steifigkeit der Konstruktion.

## Patentansprüche

1. Läufer (2) einer thermischen Strömungsmaschine, insbesondere einer Gasturbine,
mit einer Anzahl von Läuferteilen (6),
die durch einen gemeinsamen, mittig durch die Läuferteile (6) hindurch geführten Zuganker (4) zusammengehalten sind, wobei der Zuganker (4) in mindestens einem der ihn umgebenden Läuferteile (6) stellenweise über eine Anzahl von den Zuganker (4) in Umfangsrichtung umlaufenden Sternfedern (10) fixiert ist.

2. Läufer (2) nach Anspruch 1,
bei dem der Zuganker (4) stellenweise von einer Anzahl von Kühlluft-Trennrohren (12, 14) umgeben ist.

3. Läufer (2) nach Anspruch 2,
bei dem das oder jedes Kühlluft-Trennrohr (12, 14) seinerseits stellenweise über eine Anzahl von es in Umfangsrichtung umlaufenden Sternfedern (10) fixiert ist.

4. Gasturbine mit einem Läufer (2) nach einem der Ansprüche 1 bis 3.
